# EUROPÄISCHE PATENTSCHRIFT

(11) **EP 3 325 843 B1**
(45) Veröffentlichungstag und Bekanntmachung des Hinweises auf die Patenterteilung: **09.12.2020**
(21) Anmeldenummer: 16741228.7
(22) Anmeldetag: 24.06.2016
(51) Int. Cl.: F16G 13/02, B21L 1/00, C23C 8/70, C23C 8/80, C23C 10/02, C23C 10/30

(54) **KETTENELEMENT UND VERFAHREN ZUR HERSTELLUNG DESSELBEN**
CHAIN ELEMENT AND METHOD FOR PRODUCING SAME
ÉLÉMENT DE CHAÎNE ET SON PROCÉDÉ DE FABRICATION

(30) Priorität: 23.07.2015 DE 102015213965
(43) Veröffentlichungstag der Anmeldung: 30.05.2018
(73) Patentinhaber: Schaeffler Technologies AG & Co. KG, 91074 Herzogenaurach (DE)
(72) Erfinder: POIRET, Christian, 62137 Coulogne (FR); ASGAR POUR KHEZER ABAD, Monir, 62720 Rinxent (FR)
(86) Internationale Anmeldenummer: PCT/DE2016/200290
(87) Internationale Veröffentlichungsnummer: WO 2017/012617

(56) Entgegenhaltungen:
- EP-A2- 1 811 200
- EP-A2- 2 868 947
- WO-A1-2014/044420
- DE-A1- 3 725 321

## Beschreibung

Die vorliegende Erfindung betrifft ein Kettenelement.

Ferner betrifft die Erfindung ein Verfahren zur Herstellung eines Kettenelements.

Gattungsgemäße Kettenelemente werden z. B. als Kettenantriebe oder Teile entsprechender Kettenantriebe zur Übertragung von Kräften verwendet und kommen in einer Vielzahl an unterschiedlichen Gebieten der Technik, wie beispielsweise im Bereich der Kraftfahrzeugtechnik, zum Einsatz.

Kettenelemente sind aufgrund der bei deren Betrieb herrschenden hohen mechanischen Beanspruchungen üblicherweise aus mechanisch besonders beanspruchbaren Stählen gebildet. Weiterhin ist es bekannt, Kettenelemente, insbesondere in den andere Kettenelemente oder sonstige Bauteile kontaktierenden Bereichen, mit einer die mechanischen Eigenschaften beeinflussenden Oberflächenmodifizierung, insbesondere Oberflächenhärtung, zu versehen, worunter beispielsweise eine verschleißfeste und gegenüber korrosiven Medien stabile Beschichtung zu verstehen ist. Eine entsprechende Oberflächenmodifizierung, d. h. insbesondere die Ausbildung einer besonderen Randschicht, kann beispielsweise dazu dienen, dem das Kettenelement bildenden Grundmaterial im Bereich seiner Oberfläche ein verändertes Eigenschaftsspektrum zu verleihen. So kann beispielsweise ein Material, insbesondere ein Stahl, mit einer bestimmten Festigkeit und Zähigkeit mit einer besonders verschleißfesten und korrosionsstabilen Randschicht versehen und so gezielt in seinen mechanischen Eigenschaften verändert werden. Bekannte Verfahren zur Modifizierung der Oberfläche von Stählen, d. h. zur Ausbildung entsprechender Randschichten, sind beispielsweise Aufkohlen (Carburieren), Nitrieren und/oder die Aufbringung von auf Titan oder Molybdän basierenden Beschichtungen.

Es hat sich gezeigt, dass bei hoher Last des Motors oder bei großer Ölkontamination durch Verrußen, Treibstoffverdünnung und/oder Alterung des Öls die wärmebehandelten und mit einer Chrom-Carbidschicht versehenen Kettenbolzen nicht den erwarteten Widerstand gegen Verschleiß aufweisen. Mit steigender Leistung bei Kraftfahrzeugmotoren ist es unbedingt erforderlich, dass die Längung der Kette aufgrund des Verschleißes vermieden wird, um somit eine Verbesserung der Zuverlässigkeit des Motors zu erzielen. Aus eigenen Analysen an abgenutzten Ketten hat sich ergeben, dass das Schmieröl ein Parameter ist, der für die Abnutzung der Kette verantwortlich ist. Das Schmieröl im Motor zersetzt sich extrem stark. Teilchen die aufgrund der Abnutzung der Oberfläche des Kettenbolzens entstehen, führen zu einer beschleunigten Abnutzung der gleitenden Kontaktflächen. Das Schmieröl selbst kann zu einer weiteren Beschleunigung des Abschleifens der gleitenden Kontaktflächen führen. Das Schmieröl kann ferner zu einer Korrosion an der Oberfläche der Kettenbolzen und der Hülsen führen. Diese Korrosion basiert auf der Natur des Öls, dessen pH-Wert während des Gebrauchs variiert.

Das japanische Patent JP 5608280 offenbart eine Antriebskette bei der mindestens eines der verschiedenen Kettenelemente eine Oberflächenschicht aus Vanadium-Carbonitrit (VCN) auf dem Grundmaterial aufweist. Ein Film aus Vanadiumoxid (VO), der eine vorbestimmte Dicke aufweist, ist auf der Oberfläche der Oberflächenschicht aus VCN aufgebracht. Der Film aus Vanadiumoxid befindet sich bei Gebrauch also zwischen der Oberflächenschicht aus VCN und einem weiteren Reibpartner.

Die deutsche Offenlegungsschrift DE10 2012 217 020 A1 offenbart ein Kettenelement, insbesondere Kettenbolzen, zum Verbinden wenigstens zweier Kettenglieder. Das Kettenelement besteht aus einem Kohlenstoff enthaltenden Grundmaterial, insbesondere Stahl, und trägt eine Bor und Vanadium enthaltende Randschicht. Die Randschicht ist mittels eines Verfahrens hergestellt, wobei in einem ersten Verfahrensschritt eine durch wenigstens eine Maßnahme zur Diffusion von Vanadium in oberflächennahe Bereiche des Grundmaterials gebildete Kohlenstoff und Vanadium enthaltende Zwischenschicht gebildet ist. In einem folgenden zweiten Verfahrensschritt wird die Randschicht durch Umwandlung der Zwischenschicht durch wenigstens eine Maßnahme zur Diffusion von Bor in die Zwischenschicht gebildet.

Die deutsche Offenlegungsschrift DE10 2012 217 028 A1 offenbart ein Kettenelement, insbesondere Kettenbolzen zum Verbinden wenigstens zweier Kettenglieder. Das Kettenelement ist durch wenigstens eine Maßnahme zur Diffusion von Kohlenstoff, Stickstoff und Vanadium in oberflächennahe Bereiche des Kettenelements gebildet, wobei eine Randschicht Kohlenstoff, Stickstoff und Vanadium aufweist.

Der Erfindung liegt die Aufgabe zugrunde, ein, insbesondere im Hinblick auf Verschleißfestigkeit, Korrosionsbeständigkeit und hinsichtlich der Reibung verbessertes Kettenelement anzugeben, das eine Längung einer Kette verhindert.

Diese Aufgabe wird erfindungsgemäß durch ein Kettenelement der eingangs genannten Art gelöst, das die Merkmale des Anspruchs 1 umfasst.

Eine weitere Aufgabe der Erfindung ist, ein Verfahren zu schaffen, mit dem auf kostengünstige, einfache und für die Massenproduktion geeignete Art und Weise die Oberfläche eines Kettenelements derart ausgestaltet wird, dass die Verschleißfestigkeit und Korrosionsbeständigkeit verbessert wird, so dass dadurch eine Längung einer Kette vermieden wird.

Diese Aufgabe wird erfindungsgemäß durch ein Verfahren für die Herstellung eines Kettenelements gelöst, das die Merkmale des Anspruchs 6 umfasst.

Das Kettenelement, welches insbesondere ein Kettenbolzen ist, wird zum Verbinden wenigstens zweier Kettenglieder verwendet. Das Kettenelement ist aus einem Grundmaterial, insbesondere Stahl, gebildet. Das Kettenelement trägt zumindest teilweise eine äußere Vanadium-Schicht, die von einer Vanadiumoxid-Schicht bedeckt ist, die eine äußere, zugängliche Oberfläche des Kettenelements bildet. In der Regel ist das Kettenelement an der äußeren, zugänglichen Oberfläche, die mit einem weiteren Reibpartner zusammenwirkt, mit der Vanadium-Schicht und der darauf befindlichen Vanadiumoxid-Schicht versehen.

Das erfindungsgemäße Kettenelement hat den Vorteil, dass durch eine äußere Schicht das Abnutzungsproblem vermieden wird. Durch die weitere Beschichtung kann die Widerstandsfähigkeit gegen die weitere Abnutzung verbessert werden. Diese Behandlung ändert lediglich die Eigenschaft der äußeren Beschichtung, ohne dabei die Eigenschaft der darunterliegenden Beschichtung und des Grundmaterials zu ändern.

Die Vanadium-Schicht auf der Oberfläche des Grundmaterials besitzt eine Dicke von mehr als 5 µm. Die darauf aufgebrachte Vanadiumoxid-Schicht besitzt. eine Dicke von weniger als 2µm.

Mittels des Verfahrens können Kettenelemente, insbesondere Kettenbolzen hergestellt werden, die zu einer Kette zusammengesetzt werden können.

Das Verfahren umfasst die folgenden Schritte:
- dass zunächst eine Vanadium-Schicht mit einer Dicke von mehr als 5 µm auf eine Oberfläche eines Grundmaterials des Kettenelements aufgebracht wird; und
- dass auf der Oberfläche der Vanadium-Schicht eine Vanadiumoxid-Schicht eine Dicke von weniger als 2µm aufgebracht wird.

Parameter für die Beschichtung der Vanadium-Schicht mit der Vanadiumoxid-Schicht auf dem Grundmaterial werden also derart eingestellt, dass eine Dicke der Vanadiumoxid-Schicht weniger als 2µm beträgt. Gemäß einer möglichen Ausführungsform wird nach der Aufbringung der Vanadium-Schicht auf dem Kettenelement ein Aufheizen auf eine Temperatur von 550°C durchgeführt. Diese Temperatur für ca. 3 Stunden gehalten. Anschließend werden die Kettenelemente mit der Vanadiumoxid-Schicht bei normaler Umgebungsatmosphäre (gewöhnliche Umgebungsbedingungen) abgekühlt.

Mithin kann das erfindungsgemäße Kettenelement z. B. ohne Weiteres unter den dort regelmäßig mechanisch wie auch korrosiv hoch beanspruchenden Betriebsbedingungen als Teil des Antriebsstrangs moderner Kraftfahrzeuge eingesetzt werden, wo es sich durch seine im Vergleich zu konventionellen Kettenelementen verbesserte Standzeit auszeichnet. Dies begründet sich insbesondere durch die vorgenannte erhöhte Verschleißfestigkeit gegenüber von im Betrieb des Kraftfahrzeugs entstehenden, aus Komponenten des Antriebsstrangs durch Verschleiß entstammenden abrasiven Partikeln, wie auch der erhöhten Korrosionsbeständigkeit gegenüber der durch degradierte Schmiermittel bedingten korrosiven Umgebung der Randschicht des erfindungsgemäßen Kettenelements. Hinzu kommt nun noch der Vorteil, dass die äußere Randschicht des Kettenelements eine Borsäure-Schicht trägt, die zusätzlich zu der Widerstandsfähigkeit des Bauteils auch die Reibung reduziert und sich somit den Verbrauch an Primärenergie reduziert.

Dies hat den Vorteil, dass durch den reduzierten Verbrauch die Umwelt geschont wird und die Kundenzufriedenheit steigt.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: einen charakteristischen Ausschnitt einer Kette, umfassend mehrere Kettenelemente;
- Fig. 2: ein Kettenelement in Form eines Kettenbolzens zum Verbinden wenigstens zweier Kettenglieder einer Kette;
- Fig. 3 - 5: die wesentlichen Verfahrensschritte während der Herstellung des erfindungsgemäßen Kettenelements; und
- Fig. 6: eine graphische Darstellung der unterschiedlichen Abnutzung der Kette.

### Ausführliche Beschreibung der Zeichnung

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

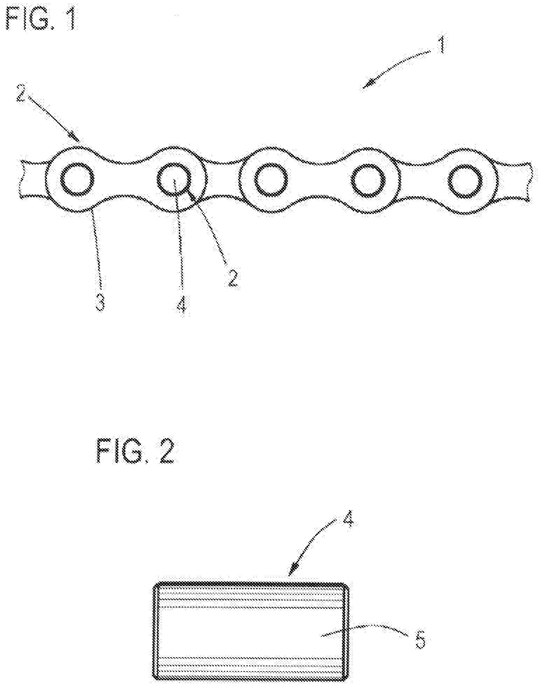

**Fig. 1** zeigt einen charakteristischen Ausschnitt einer Kette 1, umfassend mehrere Kettenelemente 2. Die Kette 1 kann als Zahnkette ausgebildet sein und so beispielsweise zur Kraftübertragung im Antriebsstrang oder als Teil des Antriebsstranges eines Kraftfahrzeugs dienen.

Ersichtlich umfasst die Kette 1 mehrere Kettenelemente 2 in Form von aufeinanderfolgend angeordneten, insbesondere laschenförmigen, Kettengliedern 3, welche über Kettenbolzen 4 miteinander verbunden sind. **Fig. 2** zeigt eine gesonderte Darstellung eines Kettenelements 2 in Form eines Kettenbolzens 4 zum Verbinden wenigstens zweier Kettenglieder 3 einer Kette 1.

Die die Kette 1 bildenden Kettenelemente 2, das heißt die Kettenglieder 3 und die Kettenbolzen 4, sind aus einem metallischen, auf Kohlenstoff und Eisen basierenden Grundmaterial 5 gebildet. Bei dem Grundmaterial für das Kettenelement 2 handelt es sich insbesondere um einen Stahl, wie z. B. SAE 1010, SAE 1012, SAE 8620, DIN 16MnCr5, bzw. dessen Grundgefüge, der in seinen Eigenschaften unverändert ist. Bevorzugt wird als Grundmaterial 5 ein Stahl mit einem Kohlenstoffgehalt von ca. 0,8 Gew.-% verwendet.

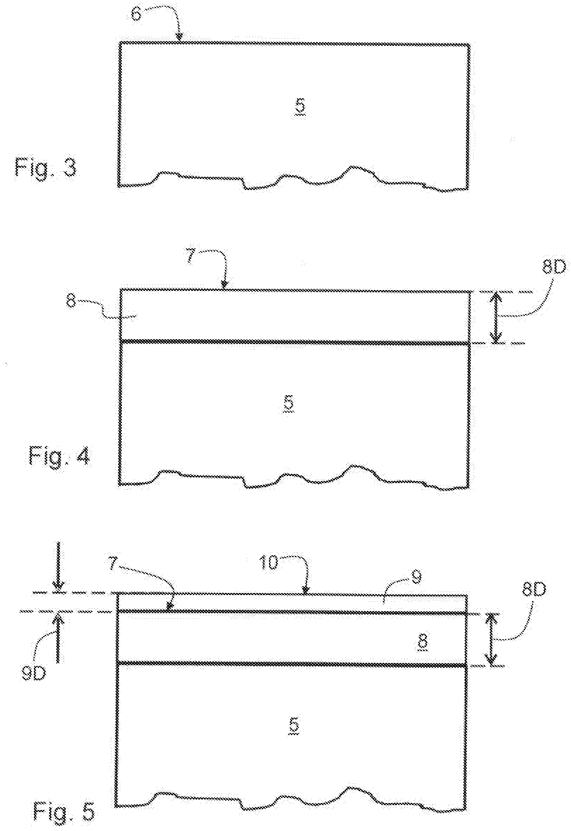

Die **Figuren 3** bis **5** beschreiben die verschiedenen Verfahrensschritte, mit denen eine Beschichtung auf einer Oberfläche 6 eines Grundmaterials 5 eines Kettenelements 2 ausgebildet wird. Zunächst wird, wie in **Figur 4** dargestellt, auf der Oberfläche 6 des Grundmaterials 5 eine Vanadium-Schicht 8 aufgebracht. Die Vanadium-Schicht 8 besitzt eine Dicke 8D. Bei dem in **Figur 5** beschriebenen Schritt wird auf der Oberfläche 7 der Vanadium-Schicht 8 eine Vanadiumoxid-Schicht 9 mit einer Dicke 9D ausgebracht. Es existieren verschiedene Verfahren im Stand der Technik mit denen die Vanadiumoxid-Schicht 9 aufgebracht werden kann. Die Vanadiumoxid-Schicht 9 auf der Oberfläche 7 der Vanadium-Schicht 8 erhöht die Widerstandskraft bei extremen Bedingungen und bei sehr großen Lasten. Die so gebildete äußere Oberfläche 10 reduziert auch adhäsive Abnutzung.

Die Vanadiumoxid-Schicht 9 an der äußeren Oberfläche 10 des Kettenelements 2 dient ebenfalls als Schmiermittel. Der Vorteil der Vanadiumoxid-Schicht 9 ist, dass die Adhäsion zwischen der äußeren Oberfläche 10 des Kettenelements 2 und einem damit zusammenwirkenden Kontaktpartner (nicht dargestellt) reduziert ist.

Vanadiumoxid ist der Name mehrerer chemischer Verbindungen von Vanadium und Sauerstoff: Die verschiedenen Konfigurationen des Vanadiumoxids, die verwendet werden können, sind:
- VO: Vanadium(II)-oxid;
- V₂O₃: Vanadium(III)-oxid;
- VO₂: Vanadium(IV)-oxid; oder
- V₂O₅: Vanadium(V)-oxid.

Bevorzugt für die Vanadiumoxid-Schicht 9 ist VO₂ oder V₂O₅. Es ist für einen Fachmann selbstverständlich, dass auch andere als die hier aufgeführten Vanadiumoxid-Verbindungen verwendet werden können.

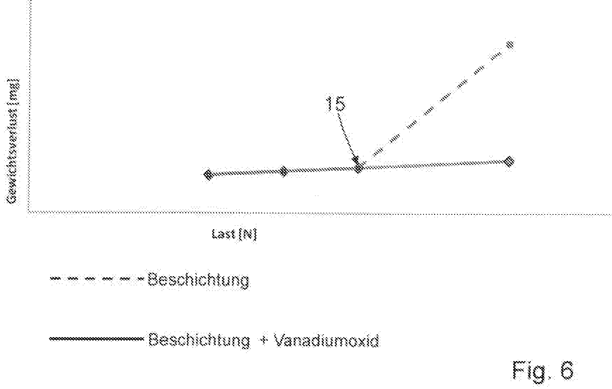

Die **Figur 6** zeigt in einer graphischen Darstellung die Auswirkung der Vanadiumoxid-Schicht 9 auf den durch Abnutzung bedingten Gewichtsverlust einer Kette 1. Der Gewichtsverlust ist in [mg] als Funktion der auf die Kette 1 wirkenden Last aufgetragen. Die Kette 1 mit Kettenelementen 2, die nur eine Beschichtung aus Vanadium 8 tragen, ist durch die gestrichelte Kurve dargestellt. Die Kette 1 mit Kettenelementen 2, die zusätzlich zur Beschichtung aus Vanadium 8 auch die Vanadiumoxid-Schicht 9 tragen, ist mit der durchgezogenen Kurve dargestellt. Ab einer bestimmten Last 15 nimmt der Gewichtsverlust der Kette 1, deren Kettenelemente 2 nur die Beschichtung aus Vanadium 8 tragen, stark zu. Dies deutet auf erhöhte Abnutzung hin.

### Bezugszeichenliste

- 1: Kette
- 2: Kettenelement
- 3: Kettenglied
- 4: Kettenbolzen
- 5: Grundmaterial
- 6: Oberfläche Grundmaterial
- 7: Oberfläche Vanadium-Schicht
- 8: Vanadium-Schicht
- 8D: Dicke Vanadium-Schicht
- 9: Vanadiumoxid-Schicht
- 9D: Dicke Vanadiumoxid-Schicht
- 10: äußere Oberfläche
- 15: Last

## Patentansprüche

1. Kettenelement (2), welches aus einem Grundmaterial (5) gebildet ist, wobei das Kettenelement (2) zumindest teilweise eine äußere Vanadium-Schicht (8) trägt, die von einer Vanadiumoxid-Schicht (9) bedeckt ist, die eine Oberfläche (10) des Kettenelements (2) bildet, **dadurch gekennzeichnet, dass** die Vanadium-Schicht (8) auf der Oberfläche (6) des Grundmaterials (5) eine Dicke (8D) von mehr als 5 µm besitzt und dass die Vanadiumoxid-Schicht (9) auf der Oberfläche (7) der Vanadium-Schicht (8) eine Dicke (9D) von weniger als 2µm besitzt.

2. Kettenelement (2) nach Anspruch 1, wobei das Vanadiumoxid bevorzugt die Konfiguration VO₂ oder V₂O₅ umfasst.

3. Kettenelement (2) nach einem der vorangehenden Ansprüche, wobei das Kettenelement (2) als ein Kettenbolzen (4) zum Verbinden wenigstens zweier Kettenglieder (3) ausgebildet ist.

4. Kettenelement (2) nach einem der vorangehenden Ansprüche, wobei das Grundmaterial aus Stahl gebildet ist.

5. Kette (1) mit einem Kettenelement (2), insbesondere Kettenbolzen (4), nach einem der vorangehenden Ansprüche.

6. Verfahren zur Herstellung eines Kettenelements (2) **gekennzeichnet durch** die folgenden Schritte:
• dass zunächst eine Vanadium-Schicht (8) mit einer Dicke (8D) von mehr als 5 µm auf eine Oberfläche (6) eines Grundmaterials (5) des Kettenelements (2) aufgebracht wird; und
• dass auf der Oberfläche (7) der Vanadium-Schicht (8) eine Vanadiumoxid-Schicht (9) aufgebracht wird, die eine Dicke (9D) von weniger als 2µm besitzt.

7. Verfahren nach Anspruch 6, wobei Parameter zur Erzeugung der Vanadiumoxid-Schicht (9) umfassen: ein Aufheizen der mit der Vanadium-Schicht (8) versehenen Kettenelemente (2) auf 550°C, ein Halten dieser Temperatur für 3 Stunden und ein anschließendes Abkühlen bei normaler Umgebungsatmosphäre.

8. Kette (1) mit Kettenelementen (2), die nach einem Verfahren gemäß einem der Ansprüche 6 oder 7 hergestellt werden.

## Claims

1. A chain element (2) which is formed from a base material (5), wherein the chain element (2) bears at least in part an outer vanadium layer (8) which is covered by a vanadium oxide layer (9) which forms a surface (10) of the chain element (2), and **characterised in that** the vanadium layer (8) on the surface (6) of the base material (5) has a thickness (8D) of more than 5 µm and **in that** the vanadium oxide layer (9) on the surface (7) of the vanadium layer (8) has a thickness (9D) of less than 2 µm.

2. The chain element (2) according to claim 1, wherein the vanadium oxide preferably comprises the configuration VO₂ or V₂O₅.

3. The chain element (2) according to any one of the preceding claims, wherein the chain element (2) is designed as a chain pin (4) for connecting at least two chain links (3).

4. The chain element (2) according to any one of the preceding claims, wherein the base material is formed of steel.

5. A chain (1) having a chain element (2), in particular a chain pin (4), according to any one of the preceding claims.

6. A method for producing a chain element (2), **characterised by** the following steps:
• that a vanadium layer (8) with a thickness (8D) of more than 5 µm is first applied to a surface (6) of a base material (5) of the chain element (2); and
• that a vanadium oxide layer (9), which has a thickness (9D) of less than 2 µm, is applied to the surface (7) of the vanadium layer (8).

7. The method according to claim 6, wherein parameters for producing the vanadium oxide layer (9) comprise: heating the chain elements (2) provided with the vanadium layer (8) to 550 °C, maintaining this temperature for 3 hours and then cooling in a normal ambient atmosphere.

8. The chain (1) having chain elements (2) which are produced using a method according to claim 6 or claim 7.

## Revendications

1. Élément de chaîne (2) qui est formé d'un matériau de base (5), l'élément de chaîne (2) portant au moins partiellement une couche externe de vanadium (8) qui est recouverte d'une couche d'oxyde de vanadium (9) qui forme une surface (10) de l'élément de chaîne (2), et **caractérisé en ce que**
la couche de vanadium (8) sur la surface (6) de matériau de base (5) présente une épaisseur (8D) de plus de 5 µm et la couche d'oxyde de vanadium (9) sur la surface (7) de la couche de vanadium (8) présentant une épaisseur (9D) inférieure à 2 µm.

2. Élément de chaîne (2) selon la revendication 1, l'oxyde de vanadium comprenant de préférence la structure VO₂ ou V₂O₅.

3. Élément de chaîne (2) selon l'une quelconque des revendications précédentes, l'élément de chaîne (2) étant conçu comme un tourillon de chaîne (4) pour connecter au moins deux maillons de chaîne (3).

4. Élément de chaîne (2) selon l'une quelconque des revendications précédentes, le matériau de base étant de l'acier.

5. Chaîne (1) comprenant un élément de chaîne (2), en particulier un tourillon de chaîne (4), selon l'une quelconque des revendications précédentes.

6. Procédé de fabrication d'un élément de chaîne (2) **caractérisé par** les étapes suivantes :
• une couche de vanadium (8) d'une épaisseur (8D) supérieure à 5 µm est d'abord appliquée sur une surface (6) d'un matériau de base (5) de l'élément de chaîne (2) ; et
• une couche d'oxyde de vanadium (9) est appliquée sur la surface (7) de la couche de vanadium (8) et présente une épaisseur (9D) inférieure à 2 µm.

7. Procédé selon la revendication 6, les paramètres de production de la couche d'oxyde de vanadium (9) comprenant : un chauffage des éléments de chaîne (2) pourvus de la couche de vanadium (8) à 550 °C, un maintien de cette température pendant 3 heures puis un refroidissement dans une atmosphère ambiante normale.

8. Chaîne (1) comprenant des éléments de chaîne (2) qui sont fabriqués par un procédé selon l'une des revendications 6 ou 7.
